(19) Europäisches Patentamt
European Patent Office
Office européen des brevets

(11) EP 3 728 478 B1

(12) FASCICULE DE BREVET EUROPEEN

(45) Date de publication et mention de la délivrance du brevet:
**22.10.2025 Bulletin 2025/43**

(21) Numéro de dépôt: **18833957.6**

(22) Date de dépôt: **18.12.2018**

(51) Classification Internationale des Brevets (IPC):
***C08L 95/00*** *(2006.01)* ***C01B 3/44*** *(2006.01)*
***C09K 15/02*** *(2006.01)* ***C09D 195/00*** *(2006.01)*
***C10C 3/02*** *(2006.01)*

(52) Classification Coopérative des Brevets (CPC):
(C-Sets disponibles)
**C08L 95/00; C09D 195/00;** C09K 15/02 (Cont.)

(86) Numéro de dépôt international:
**PCT/FR2018/053352**

(87) Numéro de publication internationale:
**WO 2019/122670 (27.06.2019 Gazette 2019/26)**

# (54) COMPOSITIONS BITUMINEUSES COMPRENANT UNE ARGILE A TEMPERATURE DE DEGRADATION ELEVEE

BITUMINÖSE ZUSAMMENSETZUNGEN MIT EINEM TON MIT HOHER ABBAUTEMPERATUR

BITUMINOUS COMPOSITIONS COMPRISING A CLAY HAVING A HIGH DEGRADATION TEMPERATURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2017 FR 1762433**

(43) Date de publication de la demande:
**28.10.2020 Bulletin 2020/44**

(73) Titulaire: **TotalEnergies OneTech**
**92400 Courbevoie (FR)**

(72) Inventeurs:
- **MERCE, Manuel**
  **40230 Bénesse-Maremne (FR)**
- **POLACCO, Giovanni**
  **56021 CASCINA (IT)**
- **FILIPPI, Sara**
  **56012 CALCINAIA (IT)**
- **CAPPELLO, Miriam**
  **56127 PISA (IT)**

(74) Mandataire: **Cabinet Beau de Loménie**
**51 avenue Jean Jaurès**
**BP 7073**
**69301 Lyon Cedex 07 (FR)**

(56) Documents cités:
**EP-A1- 0 639 615**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08L 95/00, C08L 95/005, C08K 3/346**

## Description

La présente invention concerne le domaine technique des bitumes. Plus précisément, elle concerne des compositions bitumineuses ayant des propriétés de vieillissement améliorées. L'invention concerne également les procédés de préparation de telles compositions, ainsi que leurs utilisations dans le domaine routier et dans le domaine industriel.

L'amélioration des propriétés de compositions bitumineuses a déjà fait l'objet de nombreux travaux. En particulier, lors de leurs utilisations, les compositions bitumineuses sont soumises à de nombreuses sollicitations, notamment à des variations de la température et des conditions d'intempéries. Il est donc recherché des solutions permettant d'améliorer leur résistance au vieillissement et aux dommages dus à l'humidité, à la diffusion d'oxygène (oxydation) ou aux radiations UV, notamment. Il a été proposé dans l'art antérieur d'introduire des nanoargiles pour améliorer les propriétés thermiques ou mécaniques des bitumes et la résistance au vieillissement : Z. You et al. Construction and Building Materials 2011, 25, 1072-1078 utilisent de la montmorillonite non modifiée ou modifiée avec un modifiant organique de structure :

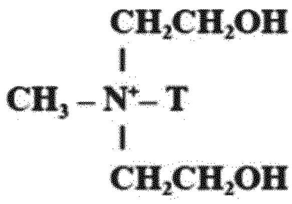

, T n'étant pas défini. Les propriétés des compositions mentionnées dans cet article n'ont été évaluées que directement après le mélange des argiles dans le bitume. Aucune étude de vieillissement sur le long terme n'a été effectuée par les auteurs.

Dans des travaux plus récents, Ashish et al. (Construction and Building Materials 2016, 113, 341-350) ont utilisé, dans des liants bitumineux pour enrobés, la Cloisite® 30B, argile organomodifiée avec le méthyl di(2-hydroxyéthyl) (suie hydrogénée) ammonium. Ces travaux démontrent un intérêt de ce type d'argile pour améliorer les propriétés mécaniques initiales des enrobés.

Dans le cadre de l'invention, les inventeurs proposent d'inclure dans des compositions bitumineuses, des argiles particulières, permettant de conduire à des propriétés de résistance au vieillissement, notamment à long terme, particulièrement satisfaisantes.

Dans ce contexte, l'invention concerne une composition bitumineuse comprenant :

- une base bitume,
- des particules d'argile organiquement modifiée réparties dans la base bitume, lesdites particules d'argile organiquement modifiée présentant une température de début de dégradation sous air supérieure ou égale à 175°C, ladite composition bitumineuse étant telle que définie à la revendication 1.

L'invention a également pour objet un procédé de préparation d'une composition bitumineuse selon l'invention comprenant le mélange de la base bitume et des particules d'argile organiquement modifiée, à une température appartenant à la gamme allant de 100 à 200°C, de préférence à la gamme allant de 120 à 180°C, et préférentiellement à la gamme allant de 140 à 180°C.

Selon un autre de ses aspects, l'invention concerne l'utilisation de particules d'argile organiquement modifiée présentant une température de début de dégradation sous air supérieure ou égale à 175°C, pour améliorer la résistance au vieillissement à long terme d'une composition bitumineuse, telle que définie à la revendication 13.

Les compositions bitumineuses selon l'invention trouvent différentes applications. Aussi, l'invention a également pour objet :

- l'utilisation d'une composition bitumineuse selon l'invention, pour préparer un revêtement d'étanchéité, une membrane ou une couche d'imprégnation ;
- les liants bitumineux comprenant une composition bitumineuse selon l'invention ;
- les enrobés bitumineux comprenant un liant bitumineux selon l'invention, des granulats, et éventuellement des charges minérales et/ou synthétiques ;
- ainsi que l'utilisation d'un liant bitumineux selon l'invention, pour préparer un enduit superficiel, un enrobé à chaud, un enrobé à froid, un enrobé coulé à froid, une grave émulsion ou une couche de roulement, ledit liant étant associé à des granulats et/ou des fraisats de recyclage.

L'invention est décrite de manière plus détaillée dans la description qui va suivre.

## Bitume

L'invention concerne les compositions de bitume modifié par ajout d'au moins un additif ou adjuvant, également nommées compositions bitumineuses. Celles-ci peuvent comprendre un ou plusieurs bitumes. Le ou les bitumes présents sont nommés « base bitume » et constitue(nt) l'essentiel de la composition, c'est-à-dire représente(nt) en général au moins 75% en masse, de la masse totale de la composition bitumineuse, et de préférence au moins 94%, voire au moins 96% et de manière encore plus préférée au moins 97% en masse de la masse totale de la composition bitumineuse. Parmi les bitumes utilisables selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Dans le cadre de l'invention, le ou les bitumes utilisés sont avantageusement choisis parmi les bitumes provenant du raffinage du pétrole brut, en particulier les bitumes contenant des asphaltènes ou des brais. Les bitumes peuvent être obtenus par des procédés conventionnels de fabrication des bitumes en raffinerie, en particulier par distillation directe et/ou distillation sous vide du pétrole. Ces bitumes peuvent être éventuellement viscoréduits et/ou désasphaltés et/ou rectifiés à l'air. Il est courant de procéder à la distillation sous vide des résidus atmosphériques provenant de la distillation atmosphérique de pétrole brut. Ce procédé de fabrication correspond, par conséquent, à la succession d'une distillation atmosphérique et d'une distillation sous vide, la charge alimentant la distillation sous vide correspondant aux résidus atmosphériques. Ces résidus sous vide issus de la tour de distillation sous vide peuvent être également utilisés comme bitumes. Il est également courant d'injecter de l'air dans une charge composée habituellement de distillats et de produits lourds provenant de la distillation sous vide de résidus atmosphériques provenant de la distillation du pétrole. Ce procédé permet d'obtenir un bitume soufflé, ou semi-soufflé ou oxydé ou rectifié à l'air ou rectifié partiellement à l'air. Différents bitumes obtenus par les procédés de raffinage peuvent être combinés dans les compositions selon l'invention, pour obtenir le meilleur compromis, en termes de performances techniques. Dans les procédés conventionnels de fabrication des compositions bitumineuses, on opère à des températures de fabrication comprises entre 100°C et 200°C, de préférence entre 140°C et 200°C, et sous agitation pendant une durée d'au moins 10 minutes, de préférence comprise entre 30 minutes et 10 heures, plus préférentiellement entre 1 heure et 6 heures. On entend par température de fabrication, la température de chauffage du ou des bitumes avant mélange avec les additifs, ainsi que la température de mélange. La température et la durée du chauffage varient selon la quantité de bitume utilisée et sont définies par la norme NF EN 12594. Les bitumes soufflés peuvent être fabriqués dans une unité de soufflage, en faisant passer un flux d'air et/ou d'oxygène à travers un bitume ou mélange de bitumes de départ. Cette opération peut être menée en présence d'un catalyseur d'oxydation, par exemple de l'acide phosphorique. Généralement, le soufflage est réalisé à des températures élevées, de l'ordre de 200 à 300°C, pendant des durées relativement longues typiquement comprises entre 30 minutes et 2 heures, en continu ou par lots. La durée et la température de soufflage sont ajustées en fonction des propriétés visées pour le bitume soufflé et en fonction de la qualité du bitume de départ.

Parmi les bitumes utilisables selon l'invention, on peut également citer les bitumes de recyclage.

Les bitumes peuvent être des bitumes de grade dur (tels que les grades 10/20 et 20/30) ou de grade mou (tel que le grade 160/220) définis par la norme EN 12591.

L'invention est particulièrement adaptée, aux cas où la base bitume est constituée d'un bitume de grade dur ou d'un mélange de bitumes de grade dur, en particulier choisi(s) parmi les bitumes de grade 35/50, 20/30 et 10/20.

Les bases bitume utilisables dans le cadre de l'invention ont, de préférence, une pénétrabilité, mesurée à 25°C selon la norme EN 1426, de 5 à 330 1/10 mm, de préférence entre 10 à 220 1/10 mm, plus préférentiellement de 10 à 120 1/10 mm. De manière bien connue, la mesure dite de « pénétrabilité à l'aiguille » est réalisée au moyen d'un test normalisé NF EN 1426 à 25°C (P25). Cette caractéristique de pénétrabilité est exprimée en dixièmes de millimètre (dmm ou 1/10 mm). La pénétrabilité à l'aiguille, mesurée à 25°C, selon le test normalisé NF EN 1426, représente la mesure de la pénétration dans un échantillon de bitume, au bout d'un temps de 5 secondes, d'une aiguille dont le poids avec son support est de 100 g.

## Argile

Dans le cadre de l'invention, les compositions bitumineuses comprennent des particules d'argile organiquement modifiée, en tant qu'additif.

L'argile peut être choisie parmi la bentonite et la montmorillonite. De manière connue, la bentonite contient de la montmorillonite (en général autour de 90%) et d'autres composants. La montmorillonite correspond à une bentonite qui a été purifiée.

Selon une caractéristique essentielle de l'invention, les particules d'argile organiquement modifiée présentent une température de début de dégradation sous air supérieure ou égale à 175°C. La température de début de dégradation des particules d'argile organiquement modifiée est, en particulier, mesurée dans le cadre de l'invention, grâce à un

analyseur thermogravimétrique, en plaçant les particules d'argile organiquement modifiée sous un débit de 60 mL/min d'air contenant 21% d'oxygène. La température est augmentée de 10°C/min. La valeur de la température de début de dégradation est obtenue en traçant la dérivée de la perte de masse en fonction de la température (%/°C), comme illustré **Figure 1.** La température de début de dégradation correspond à la température la plus basse, à partir de laquelle la dérivée de perte de masse est égale = 0,005%/°C. Pour plus de détails, on pourra se référer aux exemples qui vont suivre.

Dans le cadre de l'invention, les particules d'argile organiquement modifiée présentent, avant mélange avec la base bitume, une distance d(001) d'au moins 2,6 nm, de préférence d'au moins 3,2 nm, voire d'au moins 3,5 nm. Cette distance correspond à la distance séparant les feuillets constituant les particules d'argile. Plus la distance d(001) est élevée, plus l'argile est stable, pour un même modificateur organique. En général, les particules d'argile organiquement modifiée présenteront, néanmoins, avant mélange avec la base bitume, une distance d(001) inférieure ou égale à 5 nm, de préférence inférieure ou égale à 4 nm. En particulier, les particules d'argile organiquement modifiée présentent, avant mélange avec la base bitume, une distance d(001) dans une gamme allant de 2,6 à 5 nm ou allant de 2,6 à 4 nm ou allant de 3,2 à 5 nm ou allant de 3,2 à 4 nm ou allant de 3,5 à 5 nm ou allant de 3,5 à 4 nm. La distance d(001) peut être déterminée par diffraction des rayons X. En particulier, l'analyse par diffraction des rayons X peut être réalisée en utilisant des radiations Cu-K$\alpha$, sur une gamme angulaire 2$\theta$ allant de 1 à 10°. La distance d(001) est déterminée par la loi de Bragg selon l'équation : $n\lambda = 2d\sin\theta$. Pour plus de détails, on pourra se référer aux exemples qui vont suivre.

Les particules d'argile utilisées dans le cadre de l'invention peuvent être organiquement modifiées par différents modificateurs organiques. Le modificateur organique utilisé ne comprend pas de fonction OH. De préférence, le modificateur organique utilisé ne comprend pas de groupe aromatique.

De tels modificateurs organiques sont choisis parmi les cations comprenant au moins un groupement suie hydrogénée (en anglais « hydrogenated tallow »), et de préférence comprenant deux groupements suie hydrogénée, et notamment des cations ammonium quaternaires, tels que :

◦ le méthyl di(suie hydrogénée) ammonium, en anglais « methyl dihydrogenated tallow ammonium » de formule :

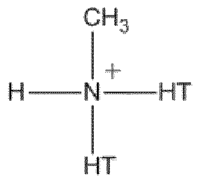

avec HT = hydrogenated tallow, en français « suie hydrogénée » qui correspond à un mélange de chaines alkyle saturées en C14-C18, qui peuvent être symbolisées par la formule $-CH_2(CH_2)_{12\text{-}16}\text{-}CH_3$, les chaines en C16-C18 étant les plus abondantes ;

◦ le diméthyl di(suie hydrogénée) ammonium, en anglais « dimethyl-dihydrogenated tallow ammonium » de formule :

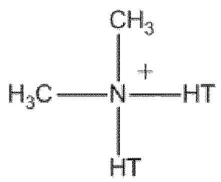

(le chlorure de diméthyl di(suie hydrogénée) ammonium a le numéro CAS 61789-80-8).

Dans le cadre de l'invention, de manière particulièrement avantageuse, on utilisera des particules d'argile organiquement modifiée présentant les caractéristiques suivantes :

- une température de début de dégradation sous air supérieure ou égale à 175°C,
- une distance d(001) d'au moins 3,2 nm, de préférence d'au moins 3,5 nm, notamment dans une gamme allant de 3,2 à 5 nm ou allant de 3,5 à 5 nm ou allant de 3,2 à 4 nm ou allant de 3,5 à 4 nm,
- les particules d'argile sont organiquement modifiées avec le méthyl di(suie hydrogénée) ammonium, ou de préférence avec le diméthyl di(suie hydrogénée) ammonium.

Des argiles organiquement modifiées utilisables dans le cadre de l'invention sont commercialement disponibles. Elles peuvent également être obtenues par échange de cations entre des cations sodium ou calcium initialement présents dans les particules d'argile et un cation organique, notamment du type ammonium quaternaire, présent dans des sels

organiques, du type chlorure par exemple. En particulier, la distance d(001) de l'argile avant ajout du modificateur organique et la nature du modificateur organique influe sur la température de dégradation de l'argile organiquement modifiée. Une distance d(001) d'au moins 2,6 nm, de préférence d'au moins 3,2 nm, voire d'au moins 3,5 nm pour les particules d'argile organiquement modifiée, avant mélange avec la base bitume, est particulièrement adaptée pour des argiles modifiées avec un cation comprenant au moins un groupement suie hydrogénée tel que précédemment décrit.

De toute façon, des particules d'argile organiquement modifiée utilisables dans le cadre de l'invention sont commercialement disponibles. A titre d'exemples, on peut citer les argiles commercialisées sous les références Dellite® 67G et Dellite® 72T commercialisées par Laviosa (Italie), sous les références Cloisite® 5 et Cloisite® 93, commercialisées par BYK (Allemagne) et sous la références Nanomer® I31PS commercialisé par Nanocor (USA).

Les particules d'argile organiquement modifiée utilisées comprennent de 20 à 50% en masse, de préférence de 30 à 50% en masse de modificateur organique, par rapport à la masse totale des particules d'argile organiquement modifiée.

Selon des modes de réalisation particuliers pouvant être combinés aux précédents, les particules d'argile organiquement modifiée présentent une taille moyenne $d_{50}$ inférieure ou égale 100 $\mu$m, de préférence inférieure ou égale à 10 $\mu$m. De telles particules d'argile sont classiquement nommées nanoargiles. De manière classique, la taille moyenne $d_{50}$ est définie comme suit : 50% en masse de la population des particules a une taille inférieure au $d_{50}$, et peut être obtenue par analyse sous diffraction laser par voie sèche. Les argiles sont, en général, de forme plaquettaire avec une épaisseur largement inférieure aux dimensions dans le plan de la plaquette.

Les compositions selon l'invention comprennent de 0,5 à 6% en masse, notamment de 1 à 4% en masse, et en particulier de 1 à 3% en masse, de particules d'argile organiquement modifiée, par rapport à la masse totale de la composition.

**Compositions bitumineuses, également nommées compositions de bitume, selon l'invention**

Bien qu'il ne soit pas exclu que les compositions de bitume selon l'invention comprennent, en plus des particules d'argile organiquement modifiée, un ou plusieurs autres additifs, notamment choisis parmi ceux classiquement utilisés dans les compositions bitumineuses, de manière préférée, la base bitume et les particules d'argile organiquement modifiée représentent au moins 90% en masse, de préférence au moins 95% en masse, voire 100% en masse de la masse totale de la composition bitumineuse.

Les particules d'argile organiquement modifiée sont dispersées dans la composition bitumineuse, et donc dans la base bitume.

Dans les compositions bitumineuses selon l'invention, les particules d'argile organiquement modifiée pourront être totalement exfoliées. Dans ce cas, il n'est pas possible de mesurer une distance d(001) sur le spectre de diffraction aux rayons X obtenu. Néanmoins, dans les compositions selon l'invention, la base bitume sera, de manière avantageuse, intercallée dans les particules d'argile organiquement modifiée. Une telle répartition est notamment illustrée dans la publication de A. Zare-Shabadi et al., Construction and Building Materials 2010, 24, 1239-1244, Figure 1. Dans un tel cas, de manière avantageuse, les particules d'argile organiquement modifiée présentent, dans la composition bitumineuse selon l'invention, une distance d(001) dans la gamme allant de 3,6 à 5 nm, de préférence dans la gamme allant de 4 à 5 nm, de manière préférée dans la gamme allant de 4 à 4,7 nm. Cette distance est supérieure à celle observée avant incorporation des particules d'argile organiquement modifiée, dans la composition bitumineuse.

L'incorporation des particules d'argile préconisée dans le cadre de l'invention permet d'améliorer la résistance au vieillissement des compositions bitumineuses obtenues, lorsque celles-ci sont soumises à une oxydation prolongée. Il a été démontré, grâce à des tests rhéologiques, que l'incorporation dans des compositions bitumineuses de particules d'argile organiquement modifiée présentant une température de début de dégradation sous air supérieure ou égale à 175°C conduisait à une meilleure résistance au vieillissement, par comparaison avec l'incorporation de particules d'argile organiquement modifiée présentant une température de début de dégradation plus basse, et notamment par comparaison avec l'incorporation de particules Cloisite® 30B utilisées dans l'art antérieur.

Les exemples qui vont suivre mettent également en évidence que l'incorporation de particules d'argile organiquement modifiée présentant une température de début de dégradation sous air supérieure ou égale à 175°C permet d'obtenir une résistance au vieillissement sous oxydation, à long terme. En particulier, les compositions bitumineuses selon l'invention présentent un indice d'oxydation inférieur ou égal à 120, l'indice d'oxydation correspondant au rapport entre le module complexe obtenu par rhéologie (rhéomètre à cisaillement dynamique, sous une fréquence de 1Hz et à une température de 70°C) après 96h d'oxydation dans un récipient de vieillissement sous pression (en anglais PAV pour « Pressure Ageing Vessel ») à 100°C et 21MPa de pression d'air, sur le module complexe obtenu avant oxydation.

Cet indice d'oxydation est donc basé sur le module complexe obtenu par rhéologie et est calculé en faisant le rapport du module complexe de la composition bitumineuse contenant les argiles après oxydation sur le module complexe de cette même composition avant oxydation. Cela se traduit par la formule suivante :

$$\text{Indice d'oxydation rhéologique} = G^*(\text{après oxydation})/G^*(\text{avant oxydation})$$

Cet indice peut être calculé pour une fréquence angulaire de 1 Hz et à une température de 70°C, en utilisant un rhéomètre à cisaillement dynamique, notamment celui de la société Malvern, modèle Kinexus Lab +.

En d'autres termes, dans le cadre de l'invention, l'évaluation des compositions bitumineuses est menée en deux temps :

1) les compositions sont vieillies en utilisant un système PAV sous 21MPa de pression d'air et à une température de 100°C, pendant une durée allant jusqu'à 96h,
2) les propriétés des compositions sont ensuite évaluées, après différents temps de vieillissement en utilisant la rhéologie. Pour cela, une mesure réalisée avec rhéomètre à cisaillement dynamique, à une fréquence de 1Hz et à une température de 70°C, est utilisée.

Aussi, l'invention concerne également l'utilisation de particules d'argile organiquement modifiée présentant une température de début de dégradation sous air supérieure ou égale à 175°C, telles que décrites dans la présente invention, pour améliorer le vieillissement à long terme d'une composition bitumineuse. Le vieillissement à long terme peut être évalué en laissant une composition bitumineuse, pendant plusieurs heures (de préférence jusqu'à 96h) à 100 °C sous une pression d'air de 21 MPa dans un récipient de vieillissement sous pression. L'air contient 21% en volume d'oxygène. Les propriétés de la composition bitumineuse peuvent ensuite être évaluées en utilisant une analyse rhéologique à 70°C et une fréquence angulaire de 1 Hz, avec un rhéomètre à cisaillement dynamique.

## Préparation des compositions bitumineuses selon l'invention

Les compositions bitumineuses de l'invention peuvent être préparées par tout procédé connu de l'homme du métier. En règle générale, ces procédés comprennent le mélange des composants et le chauffage du mélange. Le bitume peut être chauffé avant mélange. Habituellement, le bitume est chauffé avant mélange, et le ou les additifs sont additionnés au bitume sans avoir été préalablement chauffé(s). Selon un mode de réalisation particulier de l'invention, on prépare une composition de bitume selon l'invention en mettant en contact :

- la base bitume,
- 0,5 à 6% en masse, notamment 1 à 4% en masse, et en particulier 1 à 3% en masse de particules d'argile organiquement modifiée, telles que définies dans le cadre de l'invention,
- éventuellement d'autres additifs.

Les pourcentages massiques sont calculés par rapport à la masse totale de la composition bitumineuse obtenue. De manière classique, le mélange de la base bitume et des particules d'argile organiquement modifiée, est réalisé à des températures allant de 100 à 200°C, de préférence allant de 120 à 180°C, et préférentiellement allant de 140 à 180°C. De manière avantageuse, le mélange est réalisé à une température supérieure ou égale à 150°C, de préférence supérieure ou égale à 160°C.

Un tel mélange est réalisé sous agitation, notamment, pendant une durée de 5 minutes à 10 heures, de préférence de 10 minutes à 3 heures, préférentiellement de 10 à 90 minutes, et de manière encore plus préférée de 20 à 90 minutes. Le mélange peut être mis en œuvre au moyen d'une agitation produisant un fort cisaillement ou d'une agitation produisant un faible cisaillement. En particulier, le mélange est réalisé sous une agitation de 1000 à 10000 rpm, de préférence de 2000 à 5000 rpm, et préférentiellement de 2500 à 4000 rpm. L'agitation est réalisée de manière à faciliter la dispersion et la bonne distribution de l'argile dans la base bitume. L'homme du métier ajustera le temps et la puissance de l'agitation, pour obtenir une exfoliation des particules d'argile organiquement modifiée ou une intercalation avec la base bitume, en fonction de ce qui est souhaité.

## Utilisation et mise en œuvre des compositions de bitume selon l'invention

Diverses utilisations des compositions de bitume obtenues selon l'invention sont envisagées. En particulier, les compositions de bitume selon l'invention peuvent être utilisées pour la préparation d'un liant bitumineux. Le liant bitumineux selon l'invention peut à son tour être employé pour préparer une association avec des granulats, notamment routiers. S'agissant des applications routières, l'invention vise notamment des enrobés bitumineux comme matériaux pour la construction et l'entretien des corps de chaussée et de leur revêtement, ainsi que pour la réalisation de tous travaux de voirie.

Par enrobé bitumineux, on entend, un mélange d'un liant bitumineux avec des granulats et éventuellement des

charges minérales et/ou synthétiques. L'enrobé bitumineux comprend un liant bitumineux tel que décrit dans le cadre de l'invention, et éventuellement des charges minérales et/ou synthétiques, de préférence choisies parmi des fines, du sable, des gravillons et des fraisats de recyclage. Les granulats sont des granulats minéraux et/ou synthétiques, notamment, des fraisats de recyclage, de dimensions supérieures à 2 mm, de préférence comprises entre 2 mm et 20 mm.

Le liant bitumineux selon l'invention, peut, avantageusement être utilisé pour préparer un enduit superficiel, un enrobé à chaud, un enrobé à froid, un enrobé coulé à froid ou une grave émulsion. S'agissant des applications routières, l'invention vise également des asphaltes comme matériaux pour fabriquer et recouvrir des trottoirs.

Par asphalte, on entend, un mélange de liant bitumineux avec des charges minérales et/ou synthétiques. Un asphalte comprend un liant bitumineux tel que décrit dans le cadre de l'invention et des charges minérales telles que des fines, du sable ou des gravillons et/ou des charges synthétiques. Les charges minérales sont constituées de fines (particules de dimensions inférieures à 0,063 mm), de sable (particules de dimensions comprises entre 0,063 mm et 2 mm) et éventuellement de gravillons (particules de dimensions supérieures à 2 mm, de préférence comprises entre 2 mm et 4 mm). Les asphaltes présentent 100% de compacité et sont principalement utilisés pour fabriquer et recouvrir des trottoirs, alors que les enrobés possèdent une compacité inférieure à 100% et sont utilisés pour fabriquer des routes. Contrairement aux enrobés, les asphaltes ne sont pas compactés au rouleau lors de leur mise en place.

Un autre aspect de l'invention concerne l'utilisation d'une composition de bitume dans diverses applications industrielles, notamment pour préparer un revêtement d'étanchéité, une membrane ou une couche d'imprégnation. S'agissant des applications industrielles des compositions bitumineuses, on peut citer la fabrication de membranes d'étanchéité, de membranes antibruit, de membranes d'isolation, des revêtements de surface, des dalles de moquette, des couches d'imprégnation.

Les exemples ci-après, en référence aux Figures annexées, permettent d'illustrer l'invention, mais n'ont aucun caractère limitatif.

La **Figure 1** présente la courbe d'analyse thermogravimétrique - ATG obtenue pour l'argile Dellite® 67G.

La **Figure 2** présente l'évolution de l'indice d'oxydation (X), en fonction de la fréquence angulaire appliquée (Y=fréquence en Hz) pour différentes compositions bitumineuses.

La **Figure 3** présente l'indice d'oxydation obtenu en fonction du temps de vieillissement, pour différentes compositions bitumineuses selon l'invention.

## Tests réalisés

### 1. Détermination de la température de début de dégradation

- Appareil utilisé : Analyseur thermogravimétrique : modèle Q500 de TA Instrument ;
- L'échantillon de particules d'argile a été placé sous un flux d'air contenant 21% v/v d'oxygène ($O_2$) de 60 mL/min ;
- La balance a été maintenue dans une atmosphère d'azote (flux de 40 mL/min).

La température de début de dégradation a été obtenue par une mesure d'analyse thermogravimétrique (ATG) avec une rampe de montée en température de 10°C/min. La valeur de la température de début de dégradation a été obtenue en traçant la dérivée de la perte de masse en fonction de la température (%/°C). La température de début de dégradation correspond à la température la plus basse à partir de laquelle la dérivée de perte de masse est égale = 0,005%/°C, comme illustré sur la **Figure 1** dans le cas de l'argile Dellite® 67G. Pour ne pas être confondue avec une perte d'eau, la température de début de dégradation a été mesurée sur des argiles ayant au préalable été séchées à 110°C pendant 1 heure (pour éliminer toute présence d'humidité).

### 2. Mesure de la distance d(001)

L'analyse par diffraction des rayons X a été réalisée en utilisant des radiations Cu-K$\alpha$, de longueur d'onde $\lambda$ 1,54 Å sur une gamme angulaire 2$\theta$ allant de 1 à 10°. La distance d(001) est déterminée par la loi de Bragg selon l'équation : $n\lambda = 2d\sin\theta$

### 3. Essais de vieillissement

Les compositions bitumineuses ont été soumises à différentes durées de vieillissement en utilisant un système PAV (de l'anglais « Pressure Ageing Vessel ») opérant à 100°C et à 21MPa de pression d'air. La durée de vieillissement a varié de 25h à 96h. Une durée de 96h de PAV à 100°C et 21MPa de pression d'air représente un essai particulièrement

sévère en termes d'oxydation du bitume.

## 4. Caractérisations rhéologiques

Elles ont été réalisés en utilisant un rhéomètre à cisaillement dynamique de chez Malvern, marque Kinexus modèle Lab +. Les essais ont été menés, en utilisant des géomètres plan/plan de 20 mm. Les résultats ont été obtenus en effectuant des balayages en fréquence dans le domaine linéaire à 70°C.

Deux types de caractérisations ont été effectués :

- Une caractérisation d'un indice d'oxydation en faisant varier la fréquence angulaire pour des compositions bitumineuses ayant subi une étape d'oxydation de 25h de PAV à 100°C et 21MPa de pression d'air **(Figure 2)** ;
- Une caractérisation à une fréquence de 1Hz d'un indice d'oxydation en fonction de la durée d'oxydation au PAV **(Figure 3).**

Dans les deux cas, l'indice d'oxydation est basé sur le module complexe obtenu par rhéologie, il est calculé en faisant le rapport du module complexe de la composition bitumineuse contenant les argiles après oxydation, sur le module complexe de cette même composition avant oxydation. Cela se traduit par la formule suivante :

Indice d'oxydation rhéologique = G*(après oxydation)/G*(avant oxydation)

## Préparations des compositions bitumineuses

Les résultats présentés ont été obtenus dans les conditions suivantes :

- Le bitume utilisé était de grade 35/50 selon l'EN 12591 ;
- Les particules d'argile sont introduites dans le bitume déjà chaud ;
- Température de mélange : 150°C ;
- Vitesse d'agitation : 3600 rpm ;
- Agitation pendant 30 minutes ;
- La quantité d'argile introduite était de 6% m/m par rapport à la masse totale de la composition bitumineuse obtenue.

Différents essais ont été réalisés, en faisant varier la nature de l'argile introduite. Les argiles testées et leurs caractéristiques sont présentées dans le **Tableau 1** ci-après. Le **Tableau 2,** quant à lui, présente les données de diffraction aux rayons X pour les compositions bitumineuses obtenues.

**Tableau 1** : **caractéristiques des argiles testées**

| N° Exemple Nom de l'argile | Nature 1) argile 2) groupement | Tdeg (°C) | d(001) (nm) avant insertion | Taille moyenne (a) | groupement organique % m/m dans argile |
|---|---|---|---|---|---|
| Exemple 1<br>Dellite 67G | 1) Montmorillonite<br>2) diméthyl di(suie hydrogénée) ammonium | 178 | 3,7 | micrométrique | 42% |
| Exemple 2<br>Dellite 72T | 1) Montmorillonite<br>2) diméhyl di(suie hydrogénée) ammonium | 181 | 2,9 | micrométrique | 34% |
| Exemple 3<br>Cloisite 93 | 1) Montmorillonite<br>2) méthyl di(suie hydrogénée) ammonium | 190 | 2,7 | < 40 μm | 35% |
| Comparatif 1<br>Cloisite 30B | 1) Bentonite<br>2) méthyl di(2-hydroxyéthyl) (suie hydrogénée) ammonium | 170 | 1,85 | micrométrique | 25% |
| Comparatif 2<br>Nanomer I34TCN | 1) montmorillonite<br>2) méthyl di(2-hydroxyéthyl) (suie hydrogénée) ammonium | 161 | 1,8 | micrométrique | 22% |

(suite)

| N° Exemple Nom de l'argile | Nature 1) argile 2) groupement | Tdeg (°C) | d(001) (nm) avant insertion | Taille moyenne (a) | groupement organique % m/m dans argile |
|---|---|---|---|---|---|
| Exemple 4 Nanomer I31PS hors invention | 1) montmorillonite 2) propyltriéthoxysilane ammonium et octadécylammonium | 179 | 2,2 | 14 à 18μm en moyenne | 26% |
| Comparatif 3 Cloisite 10A | | 147 | 2,0 | Micrométrique (90% des particules sont de taille inférieure à 13μm) | 33% |
| (a): données des fournisseurs | | | | | |

**Tableau 2: d(001) de l'argile dans** les **compositions bitumineuses obtenues**

| N° Exemple Nom commercial de l'argile | d(001) (nm) dans le bitume Δ d(001) avant mélange et après mélange avec le bitume |
|---|---|
| Exemple 1 Dellite 67G | 4,6 Δ d(001) = 0,9 |
| Exemple 2 Dellite 72T | 4,4 Δ d(001) = 1,5 |
| Exemple 3 Cloisite 93 | 4,2 Δ d(001) = 1,5 |
| Comparatif 1 Cloisite 30B | Exfoliée donc plus de d001 car tous les feuillets sont séparés |
| Comparatif 2 Nanomer I34TCN | Exfoliée donc plus de d001 car tous les feuillets sont séparés |
| Exemple 4 hors invention Nanomer I31PS | 3,9 Δ d(001) = 1,7 |
| Comparatif 3 Cloisite 10A | 4,4 Δ d(001) (nm) = 2,4 |

La **Figure 2** présente l'évolution de l'indice d'oxydation (X), en fonction de la fréquence angulaire appliquée (Y=fréquence en Hz) pour différentes compositions bitumineuses. Il apparait que les compositions selon l'invention présentent le meilleur indice d'oxydation.

La **Figure 3** présente l'indice d'oxydation obtenu en fonction du temps de vieillissement (conditions de vieillissement : 100 °C sous une pression d'air de 21 MPa) pour les compositions bitumineuses selon l'invention comprenant les argiles Dellite® 67G, 72T et Cloisite® 93. L'indice d'oxydation est fortement réduit par rapport au bitume seul (35-50), et ce jusqu'à 96h de vieillissement. Dans le cas de l'exemple 4 et de l'exemple comparatif 3, seul le GAI après une durée de 96h de PAV à 100°C et 21MPa de pression d'air représentant un essai particulièrement sévère en termes d'oxydation du bitume, a été évalué. Un essai a également été réalisé avec seulement 3% m/m et non 6% m/m d'argile 67G. Les compositions selon l'invention présentent un vieillissement bien plus limité à 96h, même avec utilisation de seulement 3% d'argile.

## Revendications

**1.** - Composition bitumineuse comprenant :

- une base bitume,

- des particules d'argile organiquement modifiée réparties dans la base bitume,

**caractérisée en ce que** les particules d'argile organiquement modifiée présentent une température de début de dégradation sous air supérieure ou égale à 175°C et sont modifiées avec un modificateur organique choisi parmi les cations qui comprennent au moins un groupement suie hydrogénée et ne comprennent pas de fonction OH, ledit modificateur organique représentant de 20 à 50% en masse de la masse totale de l'argile organiquement modifiée, lesdites particules d'argile organiquement modifiée présentant, avant mélange avec la base bitume, une distance d(001) d'au moins 2,6 nm, lesdites particules d'argile organiquement modifiée représentant de 0,5 à 6% en masse par rapport à la masse totale de la composition bitumineuse.

**2.** - Composition bitumineuse selon la revendication 1, **caractérisée en ce que** les particules d'argile organiquement modifiée présentent, avant mélange avec la base bitume, une distance d(001) d'au moins 3,2 nm, voire d'au moins 3,5 nm.

**3.** - Composition bitumineuse selon la revendication 1 ou 2, **caractérisée en ce que** les particules d'argile sont modifiées avec un modificateur organique choisi parmi les cations comprenant deux groupements suie hydrogénée.

**4.** - Composition bitumineuse selon la revendication 3, **caractérisée en ce que** les particules d'argile sont modifiées avec le méthyl di(suie hydrogénée) ammonium ou, de préférence le diméthyl di(suie hydrogénée) ammonium.

**5.** - Composition bitumineuse selon l'une des revendications 1 à 4, **caractérisée en ce qu'**elle comprend de 1 à 4% en masse, et en particulier de 1 à 3% en masse, de particules d'argile organiquement modifiée, par rapport à la masse totale de la composition bitumineuse.

**6.** - Composition bitumineuse selon l'une des revendications 1 à 5, **caractérisée en ce que** le modificateur organique des particules d'argile organiquement modifiée représente de 30 à 50% en masse, de la masse totale de l'argile organiquement modifiée.

**7.** - Composition bitumineuse selon l'une des revendications 1 à 6, **caractérisée en ce que** l'argile est choisie parmi la bentonite et la montmorillonite.

**8.** - Composition bitumineuse selon l'une des revendications 1 à 7, **caractérisée en ce que** la base bitume est intercallée dans les particules d'argile organiquement modifiée.

**9.** - Composition bitumineuse selon l'une des revendications 1 à 8, **caractérisée en ce que** les particules d'argile organiquement modifiée présentent une taille moyenne $d_{50}$ inférieure ou égale à 100 $\mu$m, de préférence inférieure ou égale à 10 $\mu$m.

**10.** - Composition bitumineuse selon l'une des revendications 1 à 9, **caractérisée en ce que** la base bitume est constituée d'un bitume de grade dur ou d'un mélange de bitumes de grade dur, en particulier choisi(s) parmi les bitumes de grade 35/50, 20/30 et 10/20.

**11.** - Composition bitumineuse selon l'une des revendications 1 à 10, **caractérisée en ce qu'**elle présente un indice d'oxydation inférieur ou égale à 120, l'indice d'oxydation correspondant au rapport entre le module complexe obtenu par rhéologie (rhéomètre à cisaillement dynamique, sous une fréquence de 1Hz et à une température de 70°C) après 96 heures d'oxydation dans un récipient de vieillissement sous pression à 100°C et 21MPa de pression d'air, sur celui obtenu avant oxydation.

**12.** - Procédé de préparation d'une composition bitumineuse selon l'une quelconque des revendications précédentes comprenant le mélange de la base bitume et des particules d'argile organiquement modifiée, à une température appartenant à la gamme allant de 100 à 200°C, de préférence à la gamme allant de 120 à 180°C, et préférentiellement à la gamme allant de 140 à 180°C.

**13.** - Utilisation de particules d'argile organiquement modifiée présentant une température de début de dégradation sous air supérieure ou égale à 175°C, pour améliorer la résistance au vieillissement à long terme d'une composition bitumineuse comprenant une base bitume, lesdites particules d'argile étant organiquement modifiée avec un modificateur organique choisi parmi les cations qui comprennent au moins un groupement suie hydrogénée et ne comprennent pas de fonction OH, ledit modificateur organique représentant de 20 à 50% en masse de la masse totale

de l'argile organiquement modifiée, lesdites particules d'argile organiquement modifiée représentant de 0,5 à 6% en masse par rapport à la masse totale de la composition bitumineuse et lesdites particules d'argile organiquement modifiée présentant, avant mélange avec la base bitume, une distance d(001) d'au moins 2,6 nm.

**14.** - Utilisation d'une composition bitumineuse selon l'une quelconque des revendications 1 à 11, pour préparer un revêtement d'étanchéité, une membrane ou une couche d'imprégnation.

**15.** - Liant bitumineux **caractérisé en ce qu'**il comprend une composition bitumineuse selon l'une quelconque des revendications 1 à 11.

**16.** - Enrobé bitumineux **caractérisé en ce qu'**il comprend un liant bitumineux selon la revendication 15, des granulats, et éventuellement des charges minérales et/ou synthétiques.

**17.** - Utilisation d'un liant bitumineux selon la revendication 15, pour préparer un enduit superficiel, un enrobé à chaud, un enrobé à froid, un enrobé coulé à froid, une grave émulsion ou une couche de roulement, ledit liant étant associé à des granulats et/ou des fraisats de recyclage.

## Patentansprüche

**1.** - Bituminöse Zusammensetzung, umfassend:

- einen Bitumengrundstoff,
- Partikel von organisch modifiziertem Ton, die in dem Bitumengrundstoff verteilt sind, **gekennzeichnet dadurch, dass** die Partikel von organisch modifiziertem Ton eine Degradationseinsetztemperatur unter Luft von über oder gleich 175 °C aufweisen und mit einem organischen Modifizierungsmittel modifiziert sind, das ausgewählt ist aus den Kationen, die mindestens eine hydrierte Rußgruppe umfassen und keine OH-Funktion umfassen, wobei das organische Modifizierungsmittel 20 bis 50 Gew.-% des Gesamtgewichts des organisch modifizierten Tons ausmachen, wobei die Partikel von organisch modifiziertem Ton vor einer Mischung mit dem Bitumengrundstoff einen Abstand d(001) von mindestens 2,6 nm aufweisen, wobei die Partikel von organisch modifiziertem Ton bezogen auf das Gesamtgewicht der bituminösen Zusammensetzung 0,5 bis 6 Gew.-% ausmachen.

**2.** - Bituminöse Zusammensetzung nach Anspruch 1, **gekennzeichnet dadurch, dass** die Partikel von organisch modifiziertem Ton vor einer Mischung mit dem Bitumengrundstoff einen Abstand d(001) von mindestens 3,2 nm, sogar mindestens 3,5 nm aufweisen.

**3.** - Bituminöse Zusammensetzung nach Anspruch 1 oder 2, **gekennzeichnet dadurch, dass** die Partikel von Ton mit einem organischen Modifizierungsmittel modifiziert sind, das ausgewählt ist aus den Kationen, die zwei hydrierte Rußgruppen umfassen.

**4.** - Bituminöse Zusammensetzung nach Anspruch 3, **gekennzeichnet dadurch, dass** die Partikel von Ton mit Methyl-di(hydrierter Ruß)-Ammonium oder bevorzugt mit Dimethyl-di(hydrierter Ruß)-Ammonium modifiziert sind.

**5.** - Bituminöse Zusammensetzung nach einem der Ansprüche 1 bis 4, **gekennzeichnet dadurch, dass** sie bezogen auf das Gesamtgewicht der bituminösen Zusammensetzung 1 bis 4 Gew.-%, und insbesondere 1 bis 3 Gew.-% Partikel von organisch modifiziertem Ton umfasst.

**6.** - Bituminöse Zusammensetzung nach einem der Ansprüche 1 bis 5, **gekennzeichnet dadurch, dass** das organische Modifizierungsmittel der Partikel von organisch modifiziertem Ton 30 bis 50 Gew.-% des Gesamtgewichts des organisch modifizierten Tons ausmachen.

**7.** - Bituminöse Zusammensetzung nach einem der Ansprüche 1 bis 6, **gekennzeichnet dadurch, dass** der Ton ausgewählt ist aus Bentonit und Montmorillonit.

**8.** - Bituminöse Zusammensetzung nach einem der Ansprüche 1 bis 7, **gekennzeichnet dadurch, dass** der Bitumengrundstoff eingeführt ist zwischen die Partikel von organisch modifiziertem Ton.

9. - Bituminöse Zusammensetzung nach einem der Ansprüche 1 bis 8, **gekennzeichnet dadurch, dass** die Partikel von organisch modifiziertem Ton eine mittlere Größe $d_{50}$ von kleiner oder gleich 100 µm, bevorzugt kleiner oder gleich 10 µm aufweisen.

10. - Bituminöse Zusammensetzung nach einem der Ansprüche 1 bis 9, **gekennzeichnet dadurch, dass** der Bitumengrundstoff aus einem Bitumen einer harten Klasse oder aus einer Mischung von Bitumen einer harten Klasse, insbesondere ausgewählt aus Bitumen der Klasse 35/50, 20/30 und 10/20, besteht.

11. - Bituminöse Zusammensetzung nach einem der Ansprüche 1 bis 10, **gekennzeichnet dadurch, dass** sie einen Oxidationsindex von kleiner oder gleich 120 aufweist, wobei der Oxidationsindex dem Verhältnis zwischen dem komplexen Modul, das durch Rheologie (dynamisches Scherrheometer bei einer Frequenz von 1 Hz und einer Temperatur von 70 °C) nach 96 Stunden Oxidation in einem Druckalterungsbehälter bei 100 °C und 21 Mpa Luftdruck erhalten wird, und dem vor der Oxidation erhaltenen Modul entspricht.

12. - Verfahren zur Herstellung einer bituminösen Zusammensetzung nach einem der vorhergehenden Ansprüche, umfassend die Mischung des Bitumengrundstoffs und der Partikel von organisch modifiziertem Ton bei einer Temperatur, die in dem Bereich von 100 bis 200 °C, bevorzugt in dem Bereich von 120 bis 180 °C, und besonders bevorzugt in dem Bereich von 140 bis 180 °C liegt.

13. - Verwendung von Partikeln von organisch modifiziertem Ton, die eine Degradationseinsetztemperatur unter Luft von über oder gleich 175 °C aufweisen, um langfristig die Alterungsbeständigkeit einer bituminösen Zusammensetzung zu verbessern, die einen Bitumengrundstoff umfasst, wobei die Partikel von Ton mit einem organischen Modifizierungsmittel organisch modifiziert sind, das ausgewählt ist aus den Kationen, die mindestens eine hydrierte Rußgruppe umfassen und keine OH-Funktion umfassen, wobei das organische Modifizierungsmittel 20 bis 50 Gew.-% des Gesamtgewichts des organisch modifizierten Tons aufweist, wobei die Partikel von organisch modifiziertem Ton bezogen auf das Gesamtgewicht der bituminösen Zusammensetzung 0,5 bis 6 Gew.-% ausmachen und wobei die Partikel von modifiziertem Ton vor einer Mischung mit dem Bitumengrundstoff einen Abstand d(001) von mindestens 2,6 nm aufweisen.

14. - Verwendung einer bituminösen Zusammensetzung nach einem der Ansprüche 1 bis 11, um eine Abdichtungsbeschichtung, eine Membran oder eine Imprägnierungsschicht herzustellen.

15. - Bituminöses Bindemittel, **gekennzeichnet dadurch, dass** es eine bituminöse Zusammensetzung nach einem der Ansprüche 1 bis 11 umfasst.

16. - Bituminöses Mischgut, **gekennzeichnet dadurch, dass** es ein bituminöses Bindemittel nach Anspruch 15, Granulate und gegebenenfalls mineralische und/oder synthetische Füllstoffe umfasst.

17. - Verwendung eines bituminösen Bindemittels nach Anspruch 15, um einen Oberflächenbelag, ein Warmmischgut, ein Kaltmischgut, ein warm vergossenes Mischgut, kalt vergossenes Mischgut, eine Grave Emulsion oder eine Rollschicht, wobei das Bindemittel mit Granulaten und/oder Recyclingfräsgut verbunden ist.

## Claims

1. - A bituminous composition comprising:

    - a bitumen base,
    - organically modified clay particles distributed in the bitumen base,

    **characterized in that** the organically modified clay particles have a temperature at the beginning of degradation under air greater than or equal to 175°C and are modified with an organic modifier chosen from amongst cations that comprise at least one hydrogenated soot moiety and do not comprise the OH functional group, said organic modifier representing from 20 to 50% by weight of the total weight of the organically modified clay, said organically modified clay particles having, prior to mixing with the bitumen base, a distance d(001) of at least 2.6 nm, said organically modified clay particles representing from 0.5 to 6% by weight with respect to the total weight of the bituminous composition.

2. - The bituminous composition according to claim 1, **characterized in that** the organically modified clay particles have,

prior to mixing with the bitumen base, a distance d(001) of at least 3.2 nm, or even at least 3.5 nm.

**3.** - The bituminous composition according to claim 1 or 2, **characterized in that** the clay particles are modified with an organic modifier chosen from amongst the cations comprising two hydrogenated soot moieties.

**4.** - The bituminous composition according to claim 3, **characterized in that** the clay particles are modified with methyl di(hydrogenated soot) ammonium or preferably dimethyl di(hydrogenated soot) ammonium.

**5.** - The bituminous composition according to one of claims 1 to 4, **characterized in that** same comprises from 1 to 4% by weight, and in particular from 1 to 3% by weight of organically modified clay particles, with respect to the total weight of the bituminous composition.

**6.** - The bituminous composition according to one of claims 1 to 5, **characterized in that** the organic modifier of the organically modified clay particles represents from 30 to 50% by weight, of the total weight of the organically modified clay.

**7.** - The bituminous composition according to one of claims 1 to 6, **characterized in that** the clay is chosen from amongst bentonite and montmorillonite.

**8.** - The bituminous composition according to one of claims 1 to 7, **characterized in that** the bitumen base is interposed within the organically modified clay particles.

**9.** - The bituminous composition according to one of claims 1 to 8, **characterized in that** the organically modified clay particles have an average size $d_{50}$ less than or equal to 100 $\mu$m, preferably less than or equal to 10 $\mu$m.

**10.** - The bituminous composition according to one of claims 1 to 9, **characterized in that** the bitumen base consists of a hard grade bitumen or a mixture of hard grade bitumens, in particular chosen from amongst bitumens of grades 35/50, 20/30 and 10/20.

**11.** - The bituminous composition according to one of claims 1 to 10, **characterized in that** said bituminous composition has an oxidation index less than or equal to 120, the oxidation index corresponding to the ratio of the complex modulus obtained by rheology (dynamic shear rheometer, under a frequency of 1Hz and at a temperature of 70°C) after 96 hours of oxidation in an aging recipient under pressure at 100°C and 21MPa of air pressure, over the complex modulus obtained prior to oxidation.

**12.** - A method of preparation of a bituminous composition according to any of the previous claims comprising the mixture of a bitumen base and organically modified clay particles, at a temperature belonging to the range going from 100 to 200°C, preferably to the range going from 120 to 180°C and preferentially to the range going from 140 to 180°C.

**13.** - A use of organically modified clay particles having a temperature of beginning of degradation under air greater than or equal to 175°C, for improving the resistance to aging over the long term of a bituminous composition comprising a bitumen base, said clay particles being organically modified by an organic modifier chosen from amongst cations which comprise at least one hydrogenated soot moiety and do not comprise the OH functional group, said organic modifier representing from 20 to 50% by weight of the total weight of the organically modified clay, said organically modified clay particles representing from 0.5 to 6% by weight with respect to the total weight of the bituminous composition and said organically modified clay particles having, prior to mixing with the bitumen base, a distance d(001) of at least 2.6 nm.

**14.** - The use of a bituminous composition according to any of claims 1 to 11, for preparing a sealing coating, a membrane or an impregnation layer.

**15.** - A bituminous binder **characterized in that** said bituminous binder comprises a bituminous composition according to any of claims 1 to 11.

**16.** - A bituminous coated macadam **characterized in that** same comprises a bituminous binder according to claim 15, aggregates and possibly mineral and/or synthetic loadings.

**17.** - The use of a bituminous binder according to claim 15, for preparing a surface dressing, a hot macadam, a cold

macadam, a cold applied macadam, an emulsion bound graded aggregate or a wearing course, said binder being associated with aggregates and/or recycled millings.

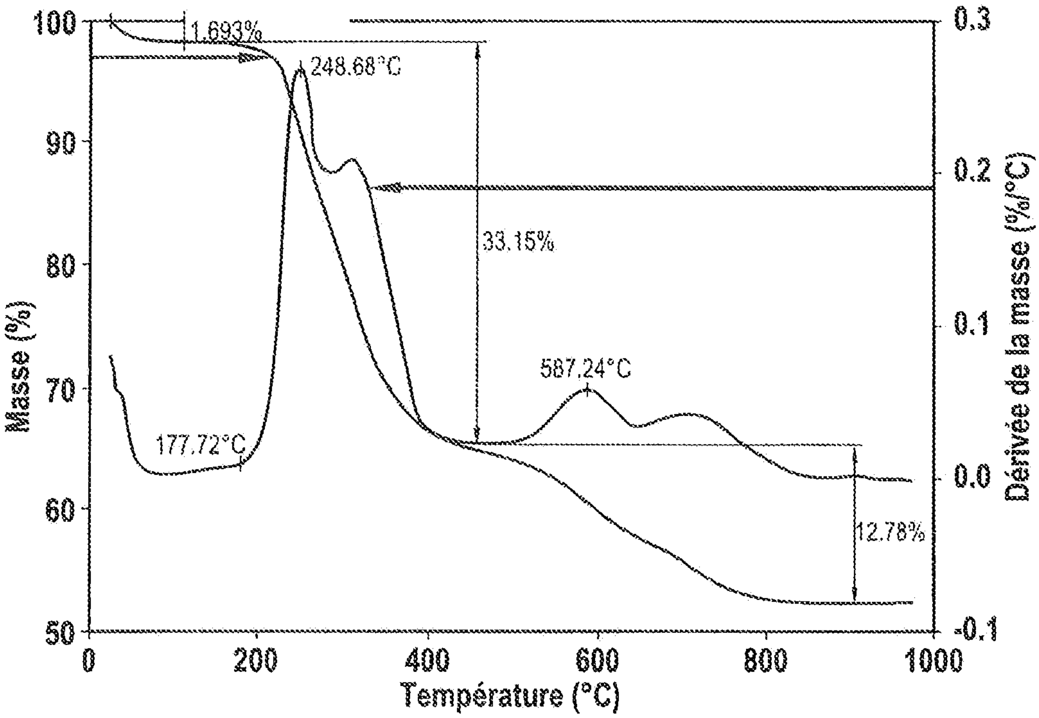
100
90
80
70
60
50
Masse (%)
1.693%
248.68°C
33.15%
587.24°C
177.72°C
12.78%
0.3
0.2
0.1
0.0
-0.1
Dérivée de la masse (%/°C)
0
200
400
600
800
1000
Température (°C)

FIG.1

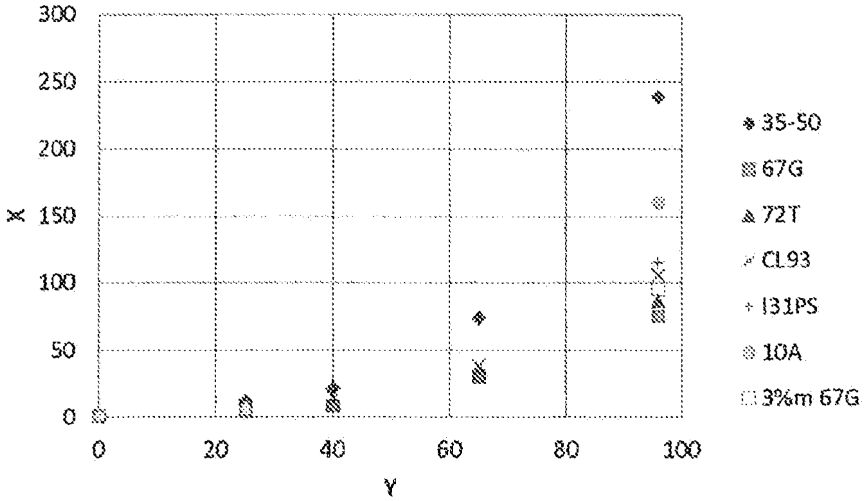
300
250
200
150
100
50
0
X
0
20
40
60
80
100
Y
35-50
67G
72T
CL93
I31PS
10A
3%m 67G

FIG.3

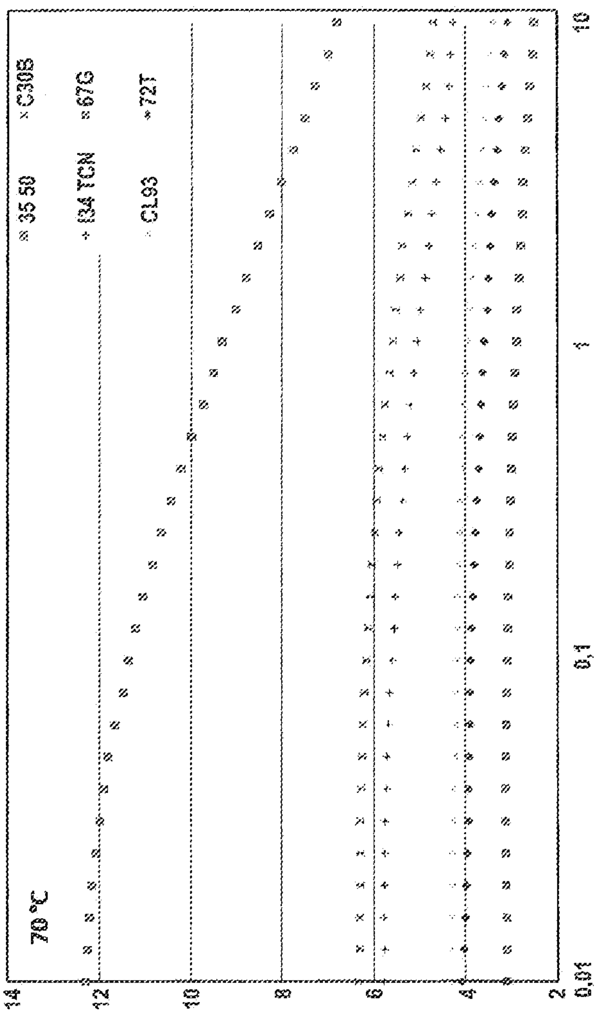


FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **Z. YOU et al.** *Construction and Building Materials*, 2011, vol. 25, 1072-1078
- **ASHISH et al.** *Construction and Building Materials*, 2016, vol. 113, 341-350
- *CHEMICAL ABSTRACTS*, 61789-80-8
- **A. ZARE-SHABADI et al.** *Construction and Building Materials*, 2010, vol. 24, 1239-1244